# FASCICULE DE BREVET EUROPEEN

(11) **EP 2 955 875 B1**
(45) Date de publication et mention de la délivrance du brevet: **10.10.2018**
(21) Numéro de dépôt: 15161764.4
(22) Date de dépôt: 30.03.2015
(51) Int. Cl.: H04L 12/24, H04L 29/08, G06F 9/54, G06F 17/30, H04L 12/26

(54) **SERVEUR, CLIENT ET SYSTÈME DE GESTION D'UN RÉSEAU D'INTERCONNEXION**
SERVER, CLIENT UND SYSTEM ZUR STEUERUNG EINES VERBINDUNGSNETZES
SERVER, CLIENT AND SYSTEM FOR MANAGING AN INTERCONNECTION NETWORK

(30) Priorité: 13.06.2014 FR 1455446
(43) Date de publication de la demande: 16.12.2015
(73) Titulaire: Bull S.A.S., 78340 Les Clayes-sous-Bois (FR)
(72) Inventeur: Vigneras, Pierre, 91470 Angervilliers (FR); Miquee, Sébastien, 91290 Arpajon (FR)
(74) Mandataire: Novagraaf Technologies

(56) Documents cités:
- US-A1- 2003 041 094
- US-A1- 2003 140 132
- US-A1- 2008 232 274

## Description

L'invention concerne un système de gestion pour la gestion d'un réseau d'interconnexion.

On entend, ici, par « réseau d'interconnexion », tout réseau de calcul dédié (tel qu'un réseau InfiniBand), ou plus généralement toute collection d'éléments informatiques, notamment des processeurs distribués, avec des liaisons de communication physique entre eux.

Un système de gestion, utilisant un réseau secondaire, pouvant être de type Ethernet, est configuré pour gérer ce réseau de calcul dans un mode hors-bande (out-of-band).

Cependant, avec la croissance de la taille des super-calculateurs, les topologies des réseaux de calcul haute-performance se complexifient tout en se densifiant. Il s'ensuit que la gestion hors bande, au moyen d'un réseau de gestion dédié aussi dit « réseau secondaire », du réseau d'interconnexion d'un super-calculateur nécessite plus d'un composant pour:
- réagir aux événements qui pourraient se produire dans ce réseau d'interconnexion (pannes de câbles, de ports, de commutateurs ou de noeuds par exemple) ;
- vérifier les éventuelles modifications de la topologie liées à des changements de câbles ou de commutateurs (connexité, conformité aux topologies théoriques) ;
- calculer les nouvelles tables de routage en fonction des modifications et des mises à jour chargées dans les commutateurs.

US 2003/140132 A1 décrit un système gestionnaire réseau qui contient, outre une base de données de configuration d'un dispositif réseau géré, un serveur et un client qui communiquent avec le dispositif réseau géré, ledit dispositif pouvant recevoir des requêtes de changement de configuration, non seulement de la part du système gestionnaire, à travers une première interface, mais aussi de la part d'une autre entité, à travers une deuxième interface. Vu que les données de configurations stockées dans la base de données peuvent devenir obsolètes en raison des demandes de modification de configuration reçues sur la deuxième interface, pour mettre à jour les informations dans la base de données, le système gestionnaire envoie une demande de configuration de téléchargement au dispositif réseau, qui répond en transférant un fichier de configuration contenant les informations de configuration en cours d'exécution au système gestionnaire. Le système gestionnaire utilise le contenu du fichier de configuration téléchargé pour mettre à jour les informations dans la base de données. Ce processus de synchronisation peut être initié par le client de gestion de réseau dans le système gestionnaire en réponse à une entrée d'un utilisateur mais peut également être initié via un message du dispositif de réseau à la mise sous tension du dispositif.

En outre, pour des raisons de passage à l'échelle et de robustesse, chacune des tâches ci-dessus est à réaliser par des processus séparés, potentiellement depuis des machines dédiées différentes. À cette fin, un mécanisme de communication efficace permet à ces composants de partager un état global commun en dialoguant. Ce mécanisme doit être assuré par le système de gestion. Les messages sont échangés sur le réseau secondaire (ou réseau de gestion) du réseau d'interconnexion du supercalculateur. Le système de gestion permet aux processus en charge de la gestion du réseau d'interconnexion, de communiquer et de partager un état global, dont un sous-ensemble représente l'état du réseau d'interconnexion du super-calculateur (soit l'ensemble des statuts des équipements qui compose le réseau d'interconnexion du supercalculateur).

Afin d'assurer la communication entre des processus s'exécutant sur des machines différentes du réseau de gestion, ce réseau de gestion doit, notamment,
- pouvoir supporter un grand nombre de processus (plusieurs centaines voire plusieurs milliers) ;
- permettre à un processus de rejoindre ou de quitter, à tout moment, le système de gestion (en raison de panne, ou de mise à jour par exemple) ;
- maintenir un état global à jour du réseau d'interconnexion du super-calculateur ;
- maintenir un état global cohérent à terme (« eventual consistency » en terminologie anglo-saxonne) du réseau d'interconnexion du super-calculateur;
- représenter cet état global sous forme d'une table de type « clé-valeur » ;
- partager cet état global entre les différents processus interconnectés du système de gestion ;
- permettre à tout moment et à chacun des processus du système de gestion de mettre à jour un sous-ensemble voire l'intégralité de l'état global du réseau d'interconnexion ;
- gérer la fréquence des mises à jour de l'état global (de préférence, au maximum quelques centaines par seconde) ;
- limiter l'accès à l'état global, certains processus ne devant/voulant voir qu'un sous-ensemble de l'état global ;
- pouvoir tenir en mémoire vive l'état global même s'il peut avoir un nombre relativement important d'entrées (généralement, plusieurs centaines de milliers).

À cet égard, il existe des systèmes de partage d'états tels que les tables de hachage distribuées. Cependant, aucune des solutions existantes ne satisfait l'ensemble des exigences ci-dessus auxquelles un système de gestion doit répondre. En l'espèce, une table de hachage distribuée ne peut offrir les deux dernières contraintes énoncées ci-dessus.

Un objet de la présente invention est de proposer un mécanisme de communication interprocessus sous la forme d'un système de gestion répondant aux exigences précitées.

Un autre projet de la présente invention est de proposer une architecture de communication de type client/serveur pour interconnecter des processus distribués.

Un autre objet de la présente invention est de proposer un système de gestion d'un réseau d'interconnexion basé sur une communication interprocessus.

Un autre objet de la présente invention est de proposer un mécanisme de communication interprocessus asynchrone et déconnecté.

Un autre projet de la présente invention est de proposer une méthode de gestion du réseau d'interconnexion d'un super-calculateur.

A ces fins, l'invention se rapporte, selon un premier aspect, à un serveur d'un système de gestion d'un réseau d'interconnexion, ce serveur comprenant
- une structure de données associative clé-valeur configurée pour stocker un état global du réseau d'interconnexion ;
- les interfaces de connexion suivantes
   ∘ une interface serveur de configuration configurée pour communiquer, en réponse à une requête de configuration provenant d'un client pour rejoindre le système de gestion, à ce client la configuration dudit système de gestion ;
   ∘ une interface serveur de publication configurée pour diffuser, à un client connecté au système de gestion, une mise à jour dans la structure de données associative clé-valeur ;
   ∘ une interface serveur de collecte configurée pour mettre à jour, en réponse à une requête de mise à jour provenant d'un processus client connecté au système de gestion, la structure de données associative clé-valeur ;
   ∘ une interface serveur d'instantané configurée pour communiquer, en réponse à une requête d'instantané provenant d'un processus client connecté au système de gestion, un instantané d'un sous-ensemble de l'état global à ce processus client, cet état global étant stocké dans la structure de données associative clé-valeur.

Le serveur d'un système de gestion d'un réseau d'interconnexion présente, selon diverses réalisations, les caractères suivants, le cas échéant combinés :
- l'interface serveur de configuration est configurée pour communiquer l'adresse de l'interface serveur de publication, l'adresse de l'interface serveur de collecte, et l'adresse de l'interface serveur d'instantané ;
- la structure de données associative clé-valeur est une table de hachage ;
- l'implémentation de ce serveur repose, pour réagir à la requête de configuration, à la requête de mise à jour ou à la requête d'instantané, sur le paradigme événement d'interface serveur de connexion, cette interface serveur de connexion étant l'interface serveur de configuration, l'interface serveur de collecte ou l'interface serveur d'instantané.

L'invention se rapporte, selon un deuxième aspect, à un client d'un système de gestion d'un réseau d'interconnexion, ce client comprenant
- un processus client ;
- une interface client d'instantané configurée pour récupérer, depuis un serveur du système de gestion, un instantané d'un sous ensemble de l'état global du réseau d'interconnexion ;
- une interface client d'abonnement configurée pour recevoir, depuis le serveur du système de gestion, une mise à jour de l'état global du réseau d'interconnexion ;
- une interface client de configuration configurée pour récupérer, depuis le serveur du système de gestion, la configuration du système de gestion ;
- une interface client de publication de sorte que le processus client puisse publier une mise à jour de l'état global du réseau d'interconnexion, cet état global du réseau d'interconnexion étant partagé et stocké par le serveur du système de gestion.

Le client d'un système de gestion d'un réseau d'interconnexion comprend, en outre, un processus métier, ce processus métier étant pourvu d'une interface client de publication associée à ce processus métier de sorte que ce processus métier puisse publier une mise à jour de l'état global du réseau d'interconnexion.

Avantageusement, la donnée publiée par le processus client est un message sous la forme d'un message « clé-valeur ».

L'invention se rapporte, selon un troisième aspect, à un système de gestion pour la gestion d'un réseau d'interconnexion comprenant le serveur et le client présentés ci-dessus.

L'invention se rapporte, selon un quatrième aspect, à un super-calculateur comprenant un réseau d'interconnexion et le système de gestion cité ci-dessus.

Le super-calculateur comprend, en outre,
- un gestionnaire de topologie configuré pour vérifier la topologie du réseau d'interconnexion ;
- un module de supervision configuré pour récupérer une alarme envoyée par un équipement réseau du réseau d'interconnexion, et pour mettre, en conséquence, à jour le système de gestion ;
- un calculateur de routage configuré pour calculer une table de routage pour une donnée reçue depuis le système de gestion.

D'autres objets et avantages de l'invention apparaîtront à la lumière de la description des modes de réalisation, faite ci-après en référence aux dessins annexés dans lesquels :
- la figure 1 illustre un serveur d'un système de gestion selon un mode de réalisation ;
- la figure 2 illustre un client d'un système de gestion selon un mode de réalisation ;
- la figure 3 illustre la mise en oeuvre d'un système de gestion selon un mode de réalisation.

Le système de gestion d'un réseau d'interconnexion repose sur une architecture réseau de type client/serveur mettant en oeuvre des paradigmes de communication différents en fonctions des interfaces de connexion.

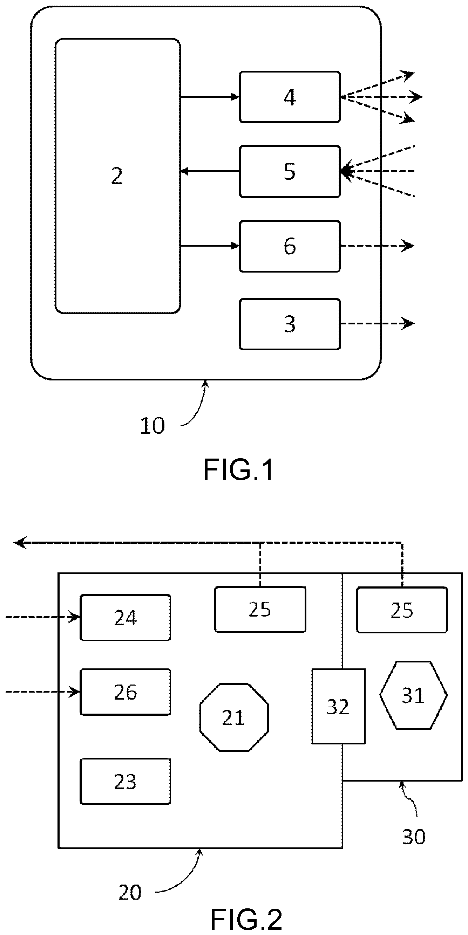

En se référant à la figure 1, le côté serveur (ou l'implémentation serveur) de cette architecture réseau du système de gestion comprend un serveur **10** du réseau de gestion.

Le serveur **10** est configuré pour détenir l'état global du réseau d'interconnexion. Cet état global comprend des informations concernant le réseau d'interconnexion du supercalculateur. Cet état global est stocké dans une structure de données **2** associative clé-valeur. Cette structure de données **2** est stockée dans une mémoire vive du serveur **10.**

La structure de données **2** associative clé-valeur est un conteneur de données, de préférence local au serveur **10,** qui possède un protocole particulier pour l'ajout, le retrait et la recherche d'éléments. Cette structure de données **2** associative clé-valeur associe une clé à une valeur. L'unicité des clés doit être garantie par les processus émetteur. Si une mise à jour est réalisée sur une clé déjà existante, l'ancienne valeur est écrasée par la nouvelle.

Dans un mode de réalisation, la structure de données **2** associative clé-valeur est une table associative, aussi dite table de hachage ou en anglais «hashmap », ayant une fonction d'association ou de hachage prédéfinie. Avantageusement, cette structure particulière de données permet un accès rapide à une valeur en fonction d'une clé.

Le serveur **10** du réseau de gestion comprend, en outre,
- une interface serveur de configuration **3** configurée pour gérer le(s) requête(s) de configuration provenant d'un client souhaitant rejoindre le système de gestion ;
- une interface serveur de publication **4** configurée pour diffuser, aux clients connectés au système de gestion, des mises à jour ayant lieu dans la structure de données **2** associative clé-valeur, soit une entrée de la structure de données 2 associative clé-valeur ;
- une interface serveur de collecte **5** configurée pour gérer les requêtes de mise à jour (des actualisations, généralement, sous la forme d'un message clé-valeur) provenant des processus clients connectés au système de gestion ;
- une interface serveur d'instantané **6** (ou de « snapshot » en terminologie anglo-saxonne) configurée pour envoyer l'état actuel, c'est-à-dire un instantané de l'ensemble ou seulement d'un sous-ensemble de la structure de donnes **2** associative clé-valeur (le filtrage pouvant être fait au niveau du serveur **10,** afin de limiter l'utilisation de la bande passante), en réponse à une requête d'instantané provenant d'un processus client connecté au système de gestion.

L'interface serveur de configuration **3** permet de communiquer la configuration du système de gestion à un client souhaitant rejoindre ce système de gestion du réseau d'interconnexion. La configuration envoyée comprend, notamment, les adresses (ou URL pour « Uniform Resource Locator ») des autres interfaces de connexion citées ci-dessus, à savoir l'interface serveur de publication **4,** l'interface serveur de collecte **5,** et l'interface serveur d'instantané **6.**

De préférence, les interfaces serveur de connexion **3-6** sont des sockets ZeroMQ (le document au lien suivant : http://zeromq.org/intro:read-the-manual spécifie les sockets ZeroMQ ou ZMQ). Ce mode de réalisation permet, en effet, d'éviter les problèmes du paradigme requête/réponse.

Il est à noter que dans l'implémentation serveur, représentée sur la figure 1, du système de gestion
- l'interface serveur de configuration **3** n'interagit pas avec la structure de données **2** associative clé-valeur ;
- l'interface serveur de collecte **5** interagit avec cette structure de données **2** associative clé-valeur en mode écriture pour y stocker des entrées clé-valeur ;
- l'interface serveur de publication **4** et l'interface serveur d'instantané **6** interagissent avec la structure de données **2** associative clé-valeur en mode lecture.

Cette implémentation serveur du système de gestion peut être réalisée en langage C, Python, ou tout autre langage de programmation approprié, ainsi qu'elle peut être dans un mode mono-thread ou multi-thread.

Dans une implémentation mono-thread du serveur **10,** ce dernier exécute la boucle suivante, basée sur le paradigme événement d'interface serveur de connexion **3,5, 6,**

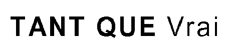

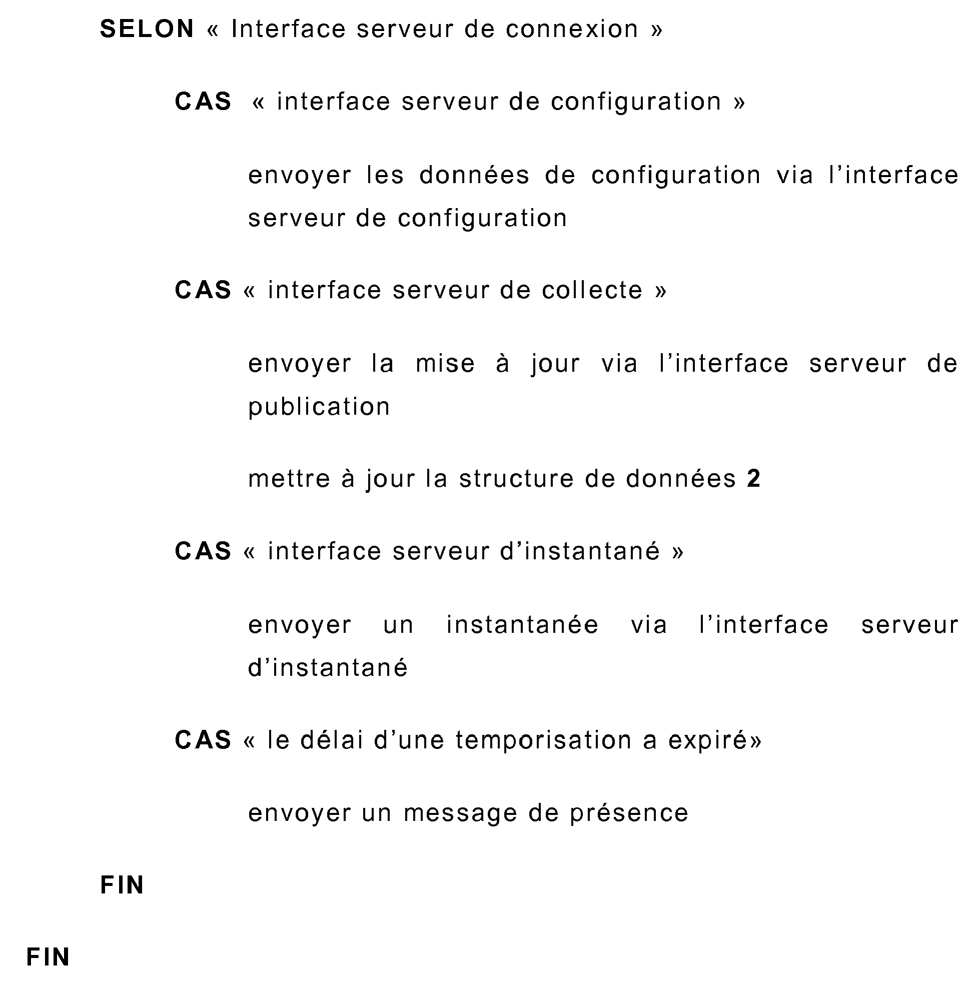

Avantageusement, cette implémentation basée sur le paradigme événement d'interface serveur de connexion **3, 5, 6** permet de réagir rapidement à une action depuis un processus client (requête ou update). L'instruction conditionnelle « SELON » gère les trois interfaces serveur de connexion (de configuration **3,** de collecte **5** et d'instantané **6**) et un temps d'attente (une temporisation) prédéfini. Elle retourne une liste comprenant la ou les interfaces de connexion déclenchées par un événement d'une interface serveur de connexion **3, 5, 6.** Si aucun événement n'est produit alors que le délai de la temporisation a expiré, le serveur **10** envoie aux clients du système de gestion un message de présence (désigné par « Heartbeat message » en terminologie anglo-saxonne).

L'ordre particulier dans lequel sont traitées les interfaces serveur de connexion **3, 5, 6** permet
- en premier lieu, à un client de se connecter au serveur **10** et de se configurer à l'aide des adresses (URLs) des autres interfaces serveur de connexion **4-6** qui lui sont communiquées via l'interface serveur de configuration **3;**
- en deuxième lieu, si le client envoie automatiquement (ou, en terminologie anglo-saxonne, « push ») une mise à jour, de prendre en compte de cette mise à jour dès que possible par le serveur **10** et de la publier auprès de tous les clients (y compris celui qui a été à l'origine de cette mise à jour), cette mise à jour pouvant déclencher des actions chez d'autres clients du système de gestion ;
- en troisième lieu, à une requête d'un instantané (en terminologie anglo-saxonne, d'un «snapshot ») d'être traitée en dernier parce qu'elle prend, généralement, le plus de temps pour s'exécuter.

Avantageusement, dans une implémentation mono-thread du serveur **10,** un mécanisme de verrouillage pour éviter des accès simultanés et concurrents à la structure de données **2** et/ou l'utilisation simultanée d'une interface serveur de connexion **3-6** n'est pas nécessaire.

Le serveur **10** du système de gestion reçoit et traite des entrées de type clé-valeur qui peuvent être interprétées comme des commandes. Ces entrées peuvent être en provenance d'un client du système de gestion. Avantageusement, ceci permet d'avoir des entrées cachées, notamment lorsque la structure de données **2** est écrite en fichiers systèmes (le cas d'un système basé sur Unix par exemple).

La figure 2 illustre une implémentation client ou le « côté client » de l'architecture client-serveur du système de gestion d'un réseau d'interconnexion.

On entend, ici, par un client **20** du système de gestion un processus client **21** qui est, généralement, configuré pour supporter au moins un processus métier **31** pour l'exécution d'un code métier **30.**

Le client **20** du système de gestion d'un réseau d'interconnexion, comprend
- une interface client d'instantané **26** configurée pour récupérer un instantané de l'état global du réseau d'interconnexion, ou d'un sous-ensemble de celui-ci ;
- une interface client d'abonnement **24** configurée pour recevoir des mises à jour depuis le serveur du système de gestion ;
- une interface client de configuration **23** configurée pour récupérer la configuration du serveur du système de gestion, en particulier les adresses (URLs) des interfaces serveur de connexion du serveur ;
- une pluralité d'interfaces client de publication **25** de sorte que le processus client **21** et tout autre processus métier **31** d'un code métier **30** puissent publier, au moyen d'entités « clé-valeur », des mises à jour de (ou, plus généralement, une donnée concernant) leurs états respectifs via une interface client de publication **25** appropriée. Il est à noter qu'un code métier **30** peut comprendre, à ses propres fins, plus d'un processus métier **31** auquel une interface client de publication **25** est associée ;
- une interface client de communication **32** entre le processus métier **31** du code métier **30** et le processus client **21.**

Le processus client **21** gère les communications entrantes du client **20** du système de gestion. Pour cela, ce processus client **21** dispose de ses propres interfaces client d'entrée **24** et **26,** c'est-à-dire celle d'instantané **26** et celle d'abonnement **24.**

L'interface client de publication **25** permet à un processus métier **31** de mettre à jour l'état global du réseau d'interconnexion qui est partagé et stocké du côté serveur.

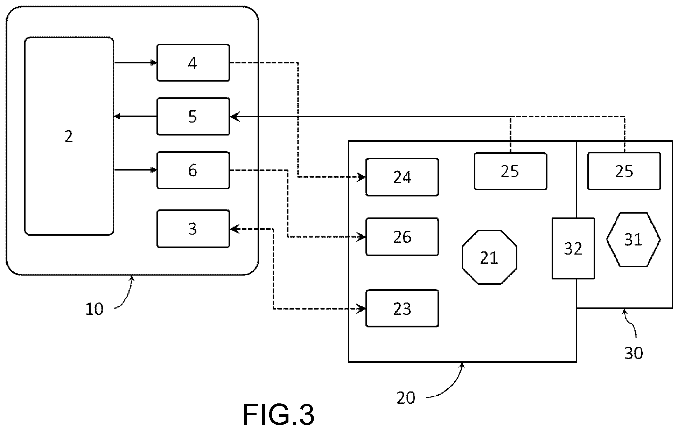

Sur la figure 3, le client **20** est connecté au serveur **10** du système de gestion.

Afin de se connecter au serveur **10,** le client **20** se connecte, d'abord, à l'interface serveur de configuration **3** pour recevoir l'ensemble des paramètres de configuration du système de gestion, dont notamment les adresses (URLs) des autres interfaces serveur de connexion **4-6** du serveur **10.** Dans un mode de réalisation, dès la réception sur l'interface serveur de configuration **3** d'une requête de configuration (par exemple, de type CONFIG ?), le serveur **10** (voir la liaison entre les interfaces de connexion **3** et **23**)
- communique via l'interface serveur de configuration **3,** en réponse à cette requête, les adresses (URLs) des trois autres interfaces de connexion **4-6** ; et
- envoie, via cette interface serveur de configuration **3,** un message indiquant la fin de l'étape de configuration (de type, par exemple Fin_CONFIG).

A la réception des paramètres de configuration, le client **20** décide de récupérer ou non un instantané (un « snapshot ») de l'état global actuel du réseau d'interconnexion (voir la liaison entre les interfaces de connexion **6** et **26**). Si c'est le cas,
- le client **20** requière, de l'interface serveur d'instantané **6,** un instantané de l'état global du réseau d'interconnexion qui est stocké dans la structure de données **2** associative clé-valeur ;
- le serveur **10** attend que le client **20** reçoive les hiérarchies auxquelles il souhaite s'abonner (ces hiérarchies peuvent, notamment, être différentes de celles spécifiées lors d'une connexion à l'interface serveur de publication **4** du serveur **10**). Ensuite, le serveur **10** envoie au client **20,** en utilisant l'interface serveur d'instantané **6,** un instantané de l'état des hiérarchies requises ;
- le serveur **10** envoie le numéro de révision actuel de la structure de données **2** associative clé-valeur.

Il s'ensuit que c'est à la charge du client **20** de se connecter à l'interface serveur de publication **4** (voir la liaison entre les interfaces de connexion **4** et **24**) pour recevoir des mises à jour, et à l'interface serveur de collecte **5** (voir la liaison entre les interfaces de connexion **5** et **25**) pour éventuellement envoyer des mises à jour (ou de nouvelles entrées).

De préférence, les mises à jour publiées par le serveur **10** sont horodatées. Avantageusement, l'horodatage (ou « timestamping » en anglais) du côté serveur garantissant la cohérence à la longue (« eventual consistency ») de l'état global au sein de chaque client **20.** Il est à noter qu'un client **20** peut ignorer des mises à jour envoyées durant la récupération d'un instantané lorsque celles-ci sont antérieures (grâce à l'horodatage) à l'instantané reçu.

En dehors du temps de connexion d'un client **20,** le serveur **10** est configuré pour réagir à chaque requête de mise à jour et d'envoyer, régulièrement, des messages de présence (« heartbeat »).

A la réception d'une requête de mise à jour, ou plus généralement d'une commande, via l'interface serveur de collecte **5,**
- si cette commande ne concerne pas le serveur **10** ou si elle n'est pas une commande spéciale (telle qu'une commande d'arrêt « shutdown »), elle est transférée aux autres clients via l'interface serveur de publication **4** ;
- le serveur **10** applique à la structure de données **2** le contenu de cette requête de mise à jour. Dans le cas d'un message de commande du serveur, ce message est d'abord comparé à la commande «vider » qui requière la suppression de tout le contenu de la structure de données **2.**

En utilisant les champs spéciaux des données d'entrée, telle que « vider » ou « ttl » pour « time to live », le serveur **10** peut supprimer cette donnée d'entrée de la structure de données **2** locale. Sinon, si aucune donnée d'entrée n'existe, alors elle est ajoutée ou mise à jour dans la structure de données **2.**

A titre d'exemples de requêtes que le serveur **10** peut recevoir, on cite
- .bbctrl/_server_kill_ : requérir du serveur **10** de quitter (ce message n'étant pas diffusé par le serveur **10**) ;
- .bbctrl/_clear_all_ : requérir du serveur **10** et de tous les clients de supprimer l'ensemble du contenu de la structure de données (ce message étant diffusé par le serveur **10**) ;
- .bbctrl/_hugz_ : un message de présence de la part du serveur.

L'entité de base, ici, est un message basé sur le paradigme « clé-valeur ». Cette entité fournit, en plus du couple clé-valeur, d'autres informations telles que le numéro de la séquence, l'identifiant universel unique de cette entité, l'identité de son émetteur, ou la durée de vie de l'entité (« Time to Live »).

Ces informations peuvent être envoyées en une ou plus plusieurs trame(s) de données. De préférence, ces informations sont envoyées en une première trame contenant la clé pour le mécanisme de souscription, et une deuxième trame contenant le reste des informations (données, identifiant de l'émetteur, numéro de séquence par exemple).

De préférence, un temps de relève dynamique est calculé avant que le sondeur de l'interface serveur de collecte **5** n'entame une période d'inactivité.

Avantageusement, l'implémentation serveur **10** du réseau de gestion permet
- de fournir les données de configuration aux clients ;
- de fournir des instantanés de l'état global du réseau d'interconnexion aux clients du système de gestion nouvellement connectés ; et
- de transférer des mises à jour dans l'état global du réseau d'interconnexion à tous les clients connectés au système de gestion.

Dans un mode de réalisation, le système de gestion est utilisé pour la gestion du réseau d'interconnexion (ou de calcul) d'un super-calculateur. Pour cela, les modules suivants peuvent être requis
- un gestionnaire de topologie responsable de la vérification de la topologie (le statut des équipements par exemple ou le schéma de connexion des équipements) du réseau d'interconnexion ;
- un module de supervision responsable de la récupération des alarmes envoyées par les différents équipements réseau du supercalculateur (notamment, les commutateurs), de les corréler afin de mettre à jour le système de gestion avec des données pertinentes (mises à jour des statuts par exemple) ;
- un calculateur de routage responsable du calcul des tables de routage pour des données reçues depuis le système de gestion.

Lorsque les composants additionnels ci-dessus démarrent, le serveur **10** du réseau de gestion est déjà présent de sorte que l'ensemble des données publiées par le gestionnaire de topologie puissent être récupéré par les autres clients du serveur **10.**

Avantageusement, les mises à jour des statuts sont faites de manière unitaire, et après agrégation, une clé spéciale, appelée élément déclencheur, est envoyée. C'est à la réception de cette dernière que le calculateur de routage déclenche sa phase de calcul des nouvelles tables de routage. Ainsi, il est possible de différencier facilement et rapidement les différents types de messages envoyés par le serveur du système de gestion
- les mises à jour de l'état global du réseau d'interconnexion ;
- les éléments déclencheurs permettant d'enclencher une action.

Il en résulte, avantageusement, une agrégation des événements afin de gagner en efficacité. En particulier, le calculateur de routage ne calcule pas les tables de routage pour chaque changement de statuts d'un seul équipement.

À cet égard, un mécanisme à base de préfixes des clés permet non seulement à chaque client de s'abonner à un sous-ensemble de l'état global, mais aussi de faire cette différenciation. De plus, ce mécanisme permet d'ajouter dans le système de gestion d'autres types d'information qui se retrouvent dans des sous-ensembles spécifiques. A titre d'exemple, les préfixes suivants peuvent être utilisés dans un système de gestion:
- @interconnect/ : ensemble des entrées concernant le statut des équipements du réseau d'interconnexion ;
- !déclencheurs/ : ensemble des entrées correspondant à des éléments déclencheurs ;
- /mngt/ : ensemble des entrées contenant des informations de connexion aux divers équipements du réseau d'interconnexion ;
- .bbctrl/ : ensemble des entrées permettant de contrôler le système de gestion, aussi bien côté client que serveur (par exemple une commande permettant d'effacer toute la table de données).

Avantageusement, les différents modes de réalisation décrits ci-dessus utilisent des paradigmes de communication différents en fonction des interfaces de connexion. Par exemple, l'interface serveur de publication **4** du serveur **10** opère en mode « diffusion » et peut utiliser un protocole de « multicast » (symétrique avec l'interface serveur d'abonnement **24** du côté du client **20**). En outre, un client **20** peut souscrire à un ou plusieurs préfixes de clés, ce qui lui permet de ne récupérer qu'un sous-ensemble de l'état global stocké dans la structure de données **2.**

L'invention est définie par l'étendue des revendications.

## Revendications

1. Un serveur (**10**) d'un système de gestion d'un réseau d'interconnexion, ce serveur comprenant
- une structure de données (**2**) associative clé-valeur configurée pour stocker un état global du réseau d'interconnexion ;
- les interfaces de connexion (**3-6**) suivantes
∘ une interface serveur de configuration (**3**) configurée pour communiquer, en réponse à une requête de configuration provenant d'un client (**20**) pour rejoindre le système de gestion, à ce client (**20**) la configuration dudit système de gestion ;
∘ une interface serveur de publication (**4**) configurée pour diffuser, à un client (**20**) connecté au système de gestion, une mise à jour dans la structure de données (**2**) associative clé-valeur ;
∘ une interface serveur de collecte (**5**) configurée pour mettre à jour, en réponse à une requête de mise à jour provenant d'un processus client (**21**) compris dans un client connecté au système de gestion, la structure de données (**2**) associative clé-valeur ;
∘ une interface serveur d'instantané (**6**) configurée pour communiquer, en réponse à une requête d'instantané provenant d'un processus client (**21**) connecté au système de gestion, un instantané d'un sous-ensemble de l'état global à ce processus client (**21**), cet état global étant stocké dans la structure de données (**2**) associative clé-valeur ;
la configuration dudit système de gestion comprenant l'adresse de l'interface serveur de publication (**4**), l'adresse de l'interface serveur de collecte (**5**), et l'adresse de l'interface serveur d'instantané (**6**).

2. Le serveur (**10**) de la revendication 1, dans lequel la structure de données (**2**) associative clé-valeur est une table de hachage.

3. Le serveur de la revendication 1 ou 2, dans lequel l'implémentation de ce serveur repose, pour réagir à la requête de configuration, à la requête de mise à jour ou à la requête d'instantané, sur le paradigme événement d'interface serveur de connexion, cette interface serveur de connexion étant l'interface serveur de configuration (**3**), l'interface serveur de collecte (**5**) ou l'interface serveur d'instantané (**6**).

4. Un client (**20**) d'un système de gestion d'un réseau d'interconnexion, ce client comprenant
- un processus client (**21**) ;
- une interface client de configuration (**23**) configurée pour récupérer, depuis une première interface (**3**) d'un serveur du système de gestion, la configuration du système de gestion pour rejoindre ce système de gestion;
- une interface client d'abonnement (**24**) configurée pour recevoir, depuis une deuxième interface (**4**) du serveur du système de gestion, une mise à jour de l'état global du réseau d'interconnexion ;
- une interface client de publication (**25**) de sorte que le processus client (**21**) puisse publier à destination d'une troisième interface (**5**) du serveur du système de gestion une mise à jour de l'état global du réseau d'interconnexion, cet état global du réseau d'interconnexion étant partagé et stocké par le serveur du système de gestion ;
- une interface client d'instantané (**26**) configurée pour récupérer, depuis une quatrième interface (**26**) du serveur du système de gestion, un instantané d'un sous ensemble de l'état global du réseau d'interconnexion,
la configuration dudit système de gestion comprenant l'adresse de la deuxième interface (**4**), l'adresse de la troisième interface (**5**), et l'adresse de la quatrième interface (**6**).

5. Le client de la revendication précédente, comprenant en outre un processus métier, ce processus métier étant pourvu d'une interface client de publication (**25**) associée à ce processus métier de sorte que ce processus métier puisse publier une mise à jour de l'état global du réseau d'interconnexion.

6. Le client de la revendication 4 ou 5, dans lequel la mise à jour publiée est un message sous la forme d'un message « clé-valeur ».

7. Un système de gestion pour la gestion d'un réseau d'interconnexion comprenant un serveur selon l'une quelconque des revendications 1 à 3 et un client selon l'une quelconque des revendications 4 à 6.

8. Un super-calculateur comprenant un réseau d'interconnexion et un système de gestion dudit réseau d'interconnexion selon la revendication 7.

9. Le super-calculateur de la revendication précédente comprenant en outre,
- un gestionnaire de topologie configuré pour vérifier la topologie du réseau d'interconnexion ;
- un module de supervision configuré pour récupérer une alarme envoyée par un équipement réseau du réseau d'interconnexion, et pour mettre, en conséquence, à jour le système de gestion ;
- un calculateur de routage configuré pour calculer une table de routage pour une donnée reçue depuis le système de gestion.

## Patentansprüche

1. Ein Server (10) eines Verwaltungssystems eines Verbindungsnetzes, wobei dieser Server aufweist
- eine assoziative Schlüssel-Werte-Datenstruktur (2), die konfiguriert ist, um einen Gesamtstatus des Verbindungsnetzes zu speichern;
- die folgenden Verbindungsschnittstellen (3-6)
∘ eine Server-Kommunikationsschnittstelle (3), die konfiguriert ist, um als Antwort auf eine Konfigurationsanfrage, die von einem Client (20) stammt, um sich dem Verwaltungssystem anzuschließen, diesem Client (20) die Konfiguration des Verwaltungssystems mitzuteilen;
∘ eine Server-Publikationsschnittstelle (4), die konfiguriert ist, um einem Client (20), der mit dem Verwaltungssystem verbunden ist, eine Aktualisierung in der assoziativen Schlüssel-Werte-Datenstruktur (2) zu senden;
∘ eine Server-Sammlungsschnittstelle (5), die konfiguriert ist, um als Antwort auf eine Aktualisierungsanfrage, die von einem Client-Prozess (21) stammt, der in einem Client enthalten ist, der mit dem Verwaltungssystem verbunden ist, die assoziative Schlüssel-Werte-Datenstruktur (2) zu aktualisieren;
∘ eine Server-Snapshot-Schnittstelle (6), die konfiguriert ist, um als Antwort auf eine Snapshot-Anfrage, die von einem Client-Prozess (21) stammt, der mit dem Verwaltungssystem verbunden ist, einen Snapshot einer Untermenge des Gesamtstatus diesem Client-Prozess (21) mitzuteilen, wobei dieser Gesamtstatus in der assoziativen Schlüssel-Werte-Datenstruktur (2) gespeichert wird;
wobei die Konfiguration des Verwaltungssystems die Adresse der Server-Publikationsschnittstelle (4), die Adresse der Server-Sammlungsschnittstelle (5) und die Adresse der Server-Snapshot-Schnittstelle (6) aufweist.

2. Der Server (10) des Anspruchs 1, wobei die Schlüssel-Werte-Datenstruktur (2) eine Hashtabelle ist.

3. Der Server des Anspruchs 1 oder 2, wobei das Implementieren des Servers, um auf die Konfigurationsanfrage, auf die Aktualisierungsanfrage oder auf die Snapshot-Anfrage zu reagieren, auf dem Ereignisparadigma der Server-Verbindungsschnittstelle beruht, wobei diese Server-Verbindungsschnittstelle die Server-Kommunikationsschnittstelle (3), die Server-Sammlungsschnittstelle (5) oder die Server-Snapshot-Schnittstelle (6) ist.

4. Ein Client (20) eines Verwaltungssystems eines Verbindungsnetzes, wobei dieser Client aufweist
- einen Client-Prozess (21);
- eine Client-Konfigurationsschnittstelle (23), die konfiguriert ist, um von einer ersten Schnittstelle (3) eines Servers des Verwaltungssystems die Konfiguration des Verwaltungssystem abzurufen, um diesem Verwaltungssystem beizutreten;
- eine Client-Abonnement-Schnittstelle (24), die konfiguriert ist, um von einer zweiten Schnittstelle (4) des Servers des Verwaltungssystems eine Aktualisierung des Gesamtstatus des Verbindungsnetzes zu empfangen;
- eine Client-Publikations-Schnittstelle (25), derart, dass der Client-Prozess (21) an eine dritten Schnittstelle (5) des Servers des Verwaltungssystems eine Aktualisierung des Gesamtstatus des Verbindungsnetzwerkes veröffentlichen kann, wobei dieser Gesamtstatus des Verbindungsnetzwerks von dem Server des Verwaltungssystems geteilt und gespeichert wird;
- eine Client-Snapshot-Schnittstelle (26), die konfiguriert ist, um von einer vierten Schnittstelle (26) des Servers des Verwaltungssystems einen Snapshot einer Untermenge des Gesamtstatus des Verbindungsnetzwerkes zu empfangen,
wobei die Konfiguration des Verwaltungssystems die Adresse der zweiten Schnittstelle (4), die Adresse der dritten Schnittstelle (5) und die Adresse der vierten Schnittstelle (6) aufweist.

5. Der Client des vorhergehenden Anspruchs, ferner umfassend einen Geschäftsprozess, wobei dieser Geschäftsprozess mit einer Client-Publikationsschnittstelle (25) versehen ist, die diesem Geschäftsprozess derart zugeordnet ist, dass dieser Geschäftsprozess eine Aktualisierung des Gesamtstatus des Verbindungsnetzes veröffentlichen kann.

6. Der Client des Anspruchs 4 oder 5, wobei die veröffentlichte Aktualisierung eine Nachricht in Form von einer "Schlüssel-Wert"-Nachricht ist.

7. Ein Verwaltungssystem zum Verwalten eines Verbindungsnetzes, umfassend einen Server nach einem der Ansprüche 1 bis 3 und einen Client nach einem der Ansprüche 4 bis 6.

8. Ein Supercomputer, umfassend ein Verbindungsnetz und ein Verwaltungssystem des Verbindungsnetzes nach Anspruch 7.

9. Der Supercomputer des vorhergehenden Anspruchs, ferner umfassend
- einen Topologieverwalter, der konfiguriert ist, um die Topologie des Verbindungsnetzes zu prüfen;
- ein Überwachungsmodul, das konfiguriert ist, um einen Alarm abzurufen, der von einem Netzwerkgerät des Verbindungsnetzes gesendet wird, und um das Verwaltungssystem entsprechend zu aktualisieren;
- einen Routing-Rechner, der konfiguriert ist, um eine Routing-Tabelle für ein Datum zu berechnen, das von dem Verwaltungssystem empfangen wird.

## Claims

1. A server (10) of a system for managing an interconnection network, this server comprising
- a key-value associative data structure (2) configured to store an overall status of the interconnection network;
- the following connection interfaces (3-6)
∘ a configuration server interface (3) configured to communicate, in response to a configuration request from a client (20) to join the management system, the configuration of said management system to this client (20);
∘ a publication server interface (4) configured to broadcast, to a client (20) connected to the management system, an update in the key-value associative data structure (2);
∘ a collection server interface (5) configured to update, in response to an update request from a client process (21) contained in a client connected to the management system, the key-value associative data structure (2);
∘ a snapshot server interface (6) configured to communicate, in response to a snapshot request from a client process (21) connected to the management system, a snapshot of a subset of the overall status to this client process (21), this overall status being stored in the key-value associative data structure (2);
the configuration of said management system comprising the address of the publication server interface (4), the address of the collection server interface (5) and the address of the snapshot server interface (6).

2. The server (10) of Claim 1, wherein the key-value associative data structure (2) is a hash table.

3. The server of Claim 1 or 2, wherein the implementation of this server is based, in order to react to the configuration request, to the update request or to the snapshot request, on the connection server interface event paradigm, this connection server interface being the configuration server interface (3), the collection server interface (5) or the snapshot server interface (6).

4. A client (20) of a system for managing an interconnection network, this client comprising
- a client process (21);
- a configuration client interface (23) configured to recover, from a first interface (3) of a server of the management system, the configuration of the management system in order to join this management system;
- a subscription client interface (24) configured to receive, from a second interface (4) of the server of the management system, an update of the overall status of the interconnection network;
- a publication client interface (25), such that the client process (21) is able to publish, to a third interface (5) of the server of the management system, an update of the overall status of the interconnection network, this overall status of the interconnection network being shared and stored by the server of the management system;
- a snapshot client interface (26) configured to recover, from a fourth interface (26) of the server of the management system, a snapshot of a subset of the overall status of the interconnection network,
the configuration of said management system comprising the address of the second interface (4), the address of the third interface (5) and the address of the fourth interface (6).

5. The client of the preceding claim, furthermore comprising a business process, this business process being provided with a publication client interface (25) associated with this business process, such that this business process is able to publish an update of the overall status of the interconnection network.

6. The client of Claim 4 or 5, wherein the published update is a message in the form of a 'key-value' message.

7. A management system for managing an interconnection network comprising a server according to any one of Claims 1 to 3 and a client according to any one of Claims 4 to 6.

8. A supercomputer comprising an interconnection network and a system for managing said interconnection network according to Claim 7.

9. The supercomputer of the preceding claim, furthermore comprising
- a topology manager configured to verify the topology of the interconnection network;
- a supervision module configured to recover an alarm sent by a network device of the interconnection network, and to update the management system as a result;
- a routing computer configured to compute a routing table for an item of data received from the management system.
